# EUROPEAN PATENT SPECIFICATION

(11) **EP 2 229 849 B1**
(45) Date of publication and mention of the grant of the patent: **04.05.2011**
(21) Application number: 09425110.5
(22) Date of filing: 20.03.2009
(51) Int. Cl.: A47J 31/36

(54) **Apparatus for the preparation and dispensing of infusions, particularly coffee, in variable volumetric doses**
Vorrichtung zur Herstellung und Abgabe von Aufgussgetränken, insbesondere Kaffee, in variablen volumetrischen Mengen
Appareil pour la préparation et la distribution d'infusions, en particulier du café, dans des doses volumétriques variables

(43) Date of publication of application: 22.09.2010
(73) Proprietor: Gruppo Cimbali S.p.A., 20082 Binasco (MI) (IT)
(72) Inventor: Sampaoli, Davide, 20082 Binasco (MI) (IT); Quaratesi, Guido, 20082 Binasco (MI) (IT); Volonte, Claudio, 20082 Binasco (MI) (IT)
(74) Representative: Perani, Aurelio

(56) References cited:
- EP-A- 0 913 111
- EP-A- 1 306 041
- EP-A- 1 800 574
- WO-A-2009/007804

## Description

The present invention relates to an apparatus for the preparation and dispensing of doses, in selectable variable volumes, of infusions, particularly of coffee, by means of pressurised water, comprising a cylindrical infusion chamber provided with a closed end and an opposed open end, a piston with an end axially insertable into said infusion chamber via said open end and removable therefrom, means for feeding a predetermined quantity of pressurised water into said chamber and opening into the latter in the zone comprised between the end of the piston inserted into the chamber and the closed end of the chamber, means for feeding into said infusion chamber a predetermined quantity of powdered product from which to form the infusion in an amount proportional to the volume selected for the dose of infusion to be prepared, means for displacing said infusion chamber between the position in which a defined quantity of coffee powder is introduced and the position in which said piston is inserted and withdrawn via said open end and vice versa, resilient means for compressing said quantity of powdered product to a defined compression value, at least one opening in said chamber for dispensing the prepared infusion, means for expelling from said infusion chamber the quantity of exhausted product used for the infusion at the end of preparation thereof, drive means for actuating said piston within said cylindrical infusion chamber and outside it, guide means for the piston, said drive means comprising an electric motor, a connecting-rod-and-crank mechanism in which mechanism the crank is connected to the rotation shaft of the motor and the connecting rod is connected between the end of the crank and the end of the piston which remains outside said cylindrical infusion chamber, and also a control unit for controlling said drive means and said means for feeding pressurised water into said infusion chamber.

Apparatuses of the type indicated above are known especially in the specific field of automatic preparation and dispensing of espresso coffee.

Typical examples of such known apparatuses are described in EP-A 0 154 206 and in EP-A 1 306 041.

As is known, espresso coffee is prepared by forcing hot water, normally at a temperature of between 88°C and 95°C, to pass through a layer of ground coffee, which will be indicated hereinafter as powdered product or simply as coffee powder.

In order to carry out the process of preparing the beverage, the chamber, containing the powdered product, must be hermetically sealed to allow the pressurisation of the water which has to pass through the layer of powder and, consequently, one of the characteristic technical problems which face the designer of a coffee machine is that of ensuring adequate and reliable closure of the chamber in which the process of preparation of the beverage takes place.

The spread of espresso coffee machines in the world has led to diversification of the types of this beverage which have been influenced by the taste and tradition of the various countries.

Therefore, the quantity of coffee powder used and the volume of the beverage dispensed into the cup may be very varied. For example, to prepare a "ristretto" espresso of the mediterranean type of 15 ccm, an average of 6 grams of ground coffee are used, whereas to prepare a dose of coffee of 120-150 ccm as consumed in Northern Europe up to 18 grams of ground coffee may be required.

However, since the pressure at which the water is forced through the coffee powder and the extraction time for the beverage should remain as constantly as possible at the ideal nominal value respectively of 9 bar and 25 seconds, the optimisation of the process of preparation of the beverage in all situations comprised between the two extremes of doses indicated above, involves the adaptation of the fineness of grinding, and of the volume and the diameter of the infusion chamber.

The dimensions of the diameter of these chambers, generally cylindrical in shape vary, according to the type of coffee, between 35 mm and 50 mm.

This means that with a pressure of 9 bar there may be, on the members which effect the closure of the infusion chamber, forces of between 880 and 1800 N in the direction of their axis.

In the dispensing devices of modern automatic type coffee machines which are normally actuated by electric motors, the movements of opening and closing of the infusion chamber are devised in such a way as to prevent the reversibility of the movement under the action of the force resulting from the pressure exerted by the water during the preparation of the beverage.

Normally, the prior art seeks to obtain this result through stops of a mechanical type in order to avoid maintaining under stress the motors of the actuating means which would otherwise have to be over-sized in order to withstand prolonged and heavy service.

In order to obtain a good quality dispensed beverage it is also necessary that, before being subjected to the thrust of the pressurised water, the coffee powder is adequately compacted inside the infusion chamber in such a way as to form a firm layer which has a homogeneous resistance to the water, which should pass through it without forming preferred paths.

The force with which the dose of coffee powder is compressed must not however be too great, otherwise there is a risk of forming a layer so compacted that it forms a barrier to the water.

Normally, a force is selected which is such as to provide a pressure of around 0.15 MPa on the member arranged to effect the compression of the dose of powder.

Moreover, in order to obtain correct extraction of the aromatic substances typical of the beverage, the grains of ground coffee should absorb the water which is forced to pass through them and they must be able to increase in volume.

For this it is necessary that the member which effects the compaction, which is generally formed by the same piston which performs the function of closing the infusion chamber, once compaction is completed should be able to retract by an amount sufficient to permit the expansion of the firm layer of ground coffee.

According to the prior art, described for example in EP-A-1 800 574, the dispensing units are provided with infusion chambers in which the operating volume is determined when the piston is in the closure position with the connecting rod and crank in alignment. With such technology the chamber may contain at maximum a certain quantity of ground coffee which depends on the diameter of the chamber and on the dimensions of the means for moving the piston, i.e. of the connecting rod and crank.

The compressive force exerted on the dose of coffee powder loaded into the chamber, according to the prior art, is provided by the resilient force of a spring interposed between the end of the connecting rod and its point of connection to the piston.

Since the resilient force possessed by such a spring is less than the force generated by the pressurised water when it is admitted into the chamber, the piston rises up and allows the ground coffee to absorb the water and to expand.

Once dispensing of the beverage is completed, the flow of pressurised water is stopped and the residual water must be eliminated from the chamber and the exhausted grounds expelled. Generally, the residual water is eliminated by placing the chamber in communication with a discharge line while the resilient means itself which, once the thrust of the pressure has ceased, returns to compact the grounds and presses out the water. When sufficient time has elapsed to obtain adequate drying of the grounds, they are then expelled in order to prepare the chamber for any new dispensing. This type of dispensing unit, designed so as to effect the loading and closure of the chamber during the first half turn of the crank so as to carry out dispensing at bottom dead centre, are designed so as to perform the expulsion movements by advancing the crank beyond bottom dead centre in order to execute a complete revolution which brings the mechanism back into the initial state, ready to carry out a fresh cycle.

A detailed description of a mechanism which operates in the manner indicated is contained, for example, in the document EP-A-1 306 041.

Although this is quite an efficient technique, it is however not devoid of drawbacks in the case where it is desired to increase the dose of ground coffee to be inserted into the infusion chamber.
In that case it is necessary either to modify the diameter of the chamber or make it much longer, increasing the stroke of the piston, which solution entails the modification of the length of the connecting rod and of the crank.

However, when it is wished to produce a machine which, based on the above-mentioned technology, enables different types of coffee to be dispensed by using doses of powdered product of between 6 and 18 grams, once the cross-section of the infusion chamber is established it becomes necessary to make its length such as to contain the product up to the maximum quantity by adjusting the stroke of the connecting rod and crank.

However, operating in this way it is possible to obtain the alignment of the connecting rod with the crank, in such a way as to maintain the axially aligned thrusts and avoid the occurrence of torque on the drive shaft which must be overcome by the motor itself in order to keep the chamber closed, only when the minimum quantity of ground product is used and the piston is in the position in which it is inserted farthest into the cylindrical chamber and positioned in proximity to the bottom thereof. For all other doses the rotational point of connection between the connecting rod and the crank must stop before bottom dead centre along the path of the connecting rod head.

With such positioning, the admission of the pressurised water into the chamber causes a torque to be produced on the drive shaft to compensate which it is necessary to adopt stratagems which have been the subject of specific known solutions in the art.

One of these solutions, for example, provides that the motor must be excited in such a way as to apply a greater counter torque in order to ensure the closure of the infusion chamber by the piston.

This solution, however, would require the use of an expensive high torque reduction motor capable of resisting with the motor locked for the entire time of preparation of the beverage without exceeding the admissible heating up limit.

Moreover, with the aforesaid constructional solution, the layer of compressed coffee powder would be prevented from swelling up and therefore from correctly absorbing the water, since the motor would have to exert a torque such as to ensure that the connecting rod reacted with a force greater than that generated by the pressure of the water continuing to compress the layer of coffee powder.

Finally, the fact of using a volume of coffee powder such as to prevent the connecting rod from reaching bottom dead centre raises the problem of how to be able to act on the device for expelling the quantity of exhausted powder from the infusion chamber once the preparation of the beverage is completed.

In fact, under these conditions the technical solution illustrated in EP-A-1 306 041 is no longer practicable.

The aim of the present invention is to propose an apparatus capable of dispensing coffee in doses having different volumes, by using an infusion chamber with fixed diameter and varying its volume via the different positioning and stopping of the piston for closure of the chamber, but overcoming the drawbacks mentioned above and encountered in the apparatuses of known type.

This aim is achieved with an apparatus which is characterized according to claim 1 which follows.

The invention will now be described in greater detail with reference to a preferred embodiment thereof, illustrated by way of non-limiting example in the appended drawings, in which:
- Figure 1 shows a schematic side view of the apparatus according to the invention with the connecting-rod-and-crank mechanism shown in a position in which the piston for closure of the infusion chamber is located outside said chamber and with the chamber positioned beneath the coffee powder loading hopper of a grinding and dosing device;
- Figure 2 shows a schematic side view of the apparatus illustrated in Figure 1, with some parts removed for the sake of clarity;
- Figure 3 shows a schematic side view of the apparatus according to the invention with the connecting-rod-and-crank mechanism shown in a position in which the piston is located inside the infusion chamber and has completed the compression of a defined dose of ground coffee;
- Figure 4 shows a schematic side view of the apparatus illustrated in Figure 3 with some parts removed for the sake of clarity;
- Figure 5 shows a side view of the connecting rod according to the invention;
- Figure 6 shows a side view of the first member constituting the connecting rod;
- Figure 7 shows a side view of the second member constituting the connecting rod;
- Figure 8 shows, on an enlarged scale, the locking devices for detachably connecting said first member of the connecting rod to a point outside the apparatus;
- Figure 9 shows a side view of the apparatus according to the invention schematically illustrating the means for expelling from the infusion chamber the layer of exhausted ground product after the preparation and dispensing of the beverage;
- Figure 10 shows a schematic side view of the apparatus according to the invention, illustrating the removal of the layer of exhausted ground product from the apparatus;
- Figure 11 shows a plan view of the cam means for the actuation of the means for expelling the layer of exhausted ground product, illustrated in a first position;
- Figure 12 shows a plan view of the cam means for the actuation of the means for expelling the layer of exhausted ground product, illustrated in the position reached at the end of the compression of the layer in the case of the maximum dose;
- Figure 13 shows a plan view of the cam means for the actuation of the means for expelling the layer of exhausted ground product, illustrated in a position assumed during the expulsion of the layer;
- Figure 14 shows a plan view of a mechanical component of the cam means of Figures 11, 12 and 13;
- Figure 15 shows in plan view the spring device acting on the mechanical component of Figure 14.

With reference to the aforesaid Figures, the reference 1 indicates generally a wall of the containment frame of the apparatus. The latter comprises a cylinder 2, of which the internal chamber 3, of circular cross-section, constitutes the infusion chamber in which the beverage, in particular coffee, is prepared.

The cylinder 2 has an open end 4 and a closed bottom 5, the latter being provided with an opening for the passage of the means for expelling the layer of exhausted coffee powder, as will be illustrated in detail hereinafter.

The discharge of the beverage, once it has been prepared, takes place via a conventional opening 3a, openable and closable, of the infusion chamber 3.

Inside the cylinder 2 are positioned a conventional filter 6 and a small plate 7, likewise conventional, forming part of the device for expelling the exhausted product at the end of preparation of the beverage, which will be described in greater detail hereinafter.

Through the open end 4, in the course of preparation of the beverage, as will become clearer hereinafter, a piston 8 is introduced which is provided with a sealing gasket 9 placed in proximity to its end 10.

The piston 8 is fixed to the end 11 of a connecting rod, indicated as a whole by 12, by means of a hinged connection represented by the pin 13.

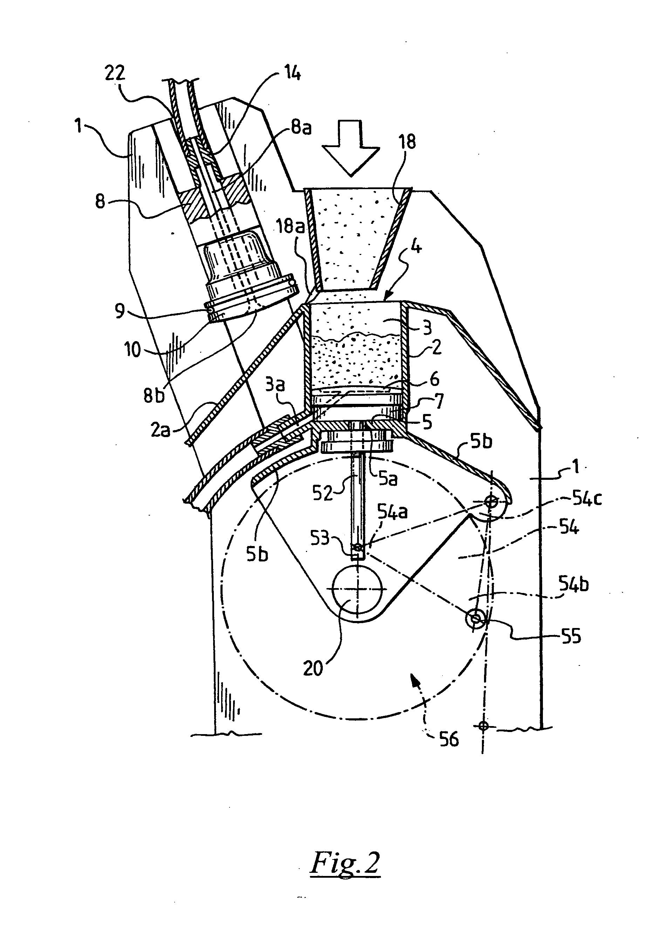

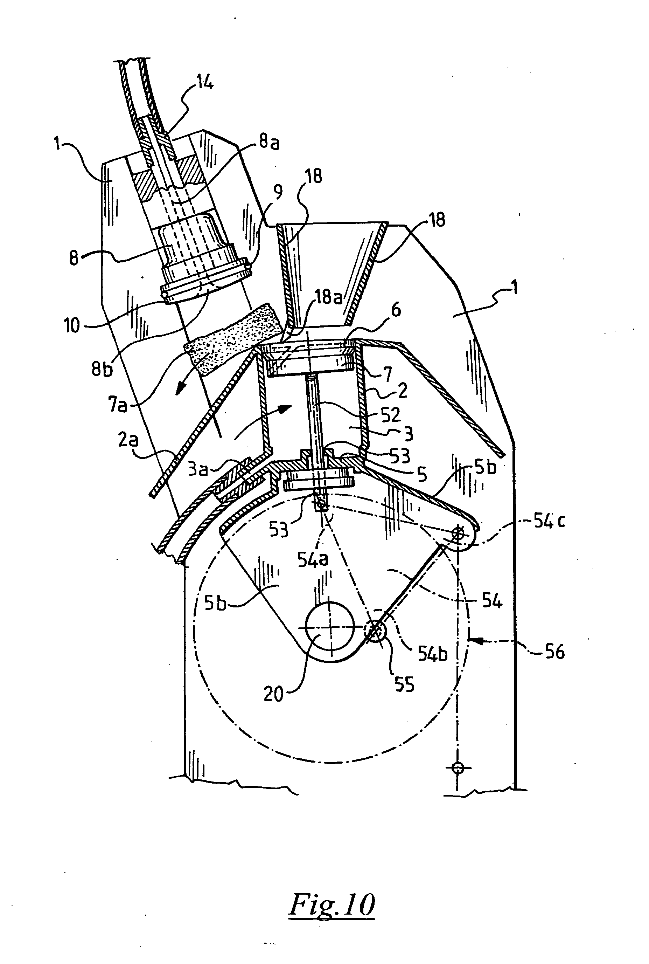

The piston 8 is provided in a conventional manner with an inner axial channel 8a which starts from the connector 14 and leads to an opening 8b, at the end 10 as indicated in Figures 2, 4 and 10.

Through the connector 14, pressurised water is fed in, generally at a defined temperature, for the preparation of the beverage when the piston 8 is located within the cylinder 2 and therefore the infusion chamber 3 is sealed closed by means of the gasket 9.

For the preparation of the beverage, before the infusion chamber 3 is closed, a defined dose of powdered product, particularly ground coffee, is introduced into the chamber.

It is introduced in a conventional manner, for example by means of a grinding and dosing device comprising a hopper 15 for loading the coffee beans and a volute 16, actuated by an electric motor 17, which feeds a dose of product to a chute 18 opening into the cylinder 2.

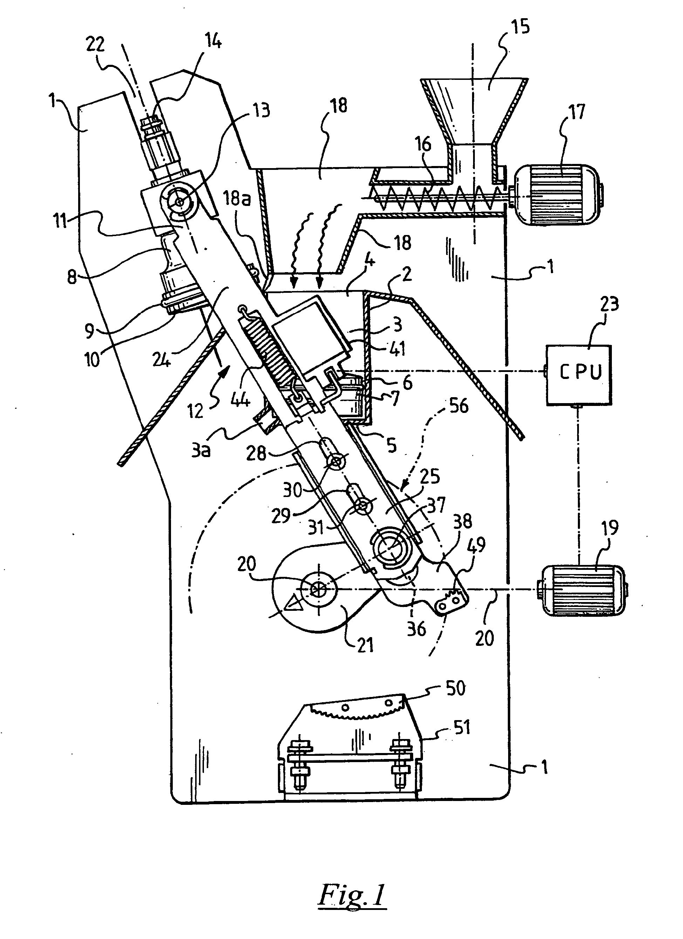

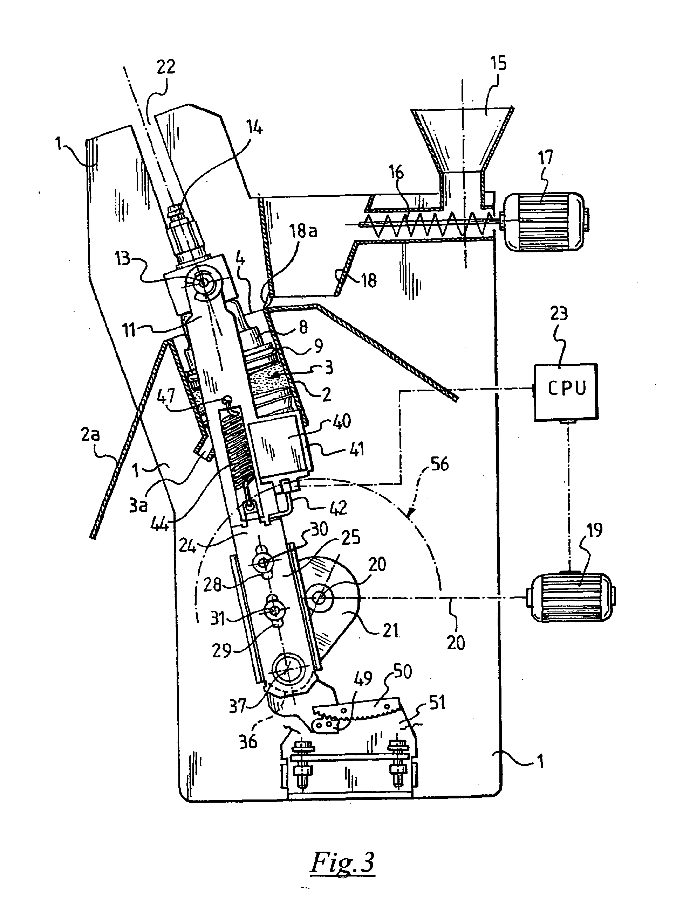

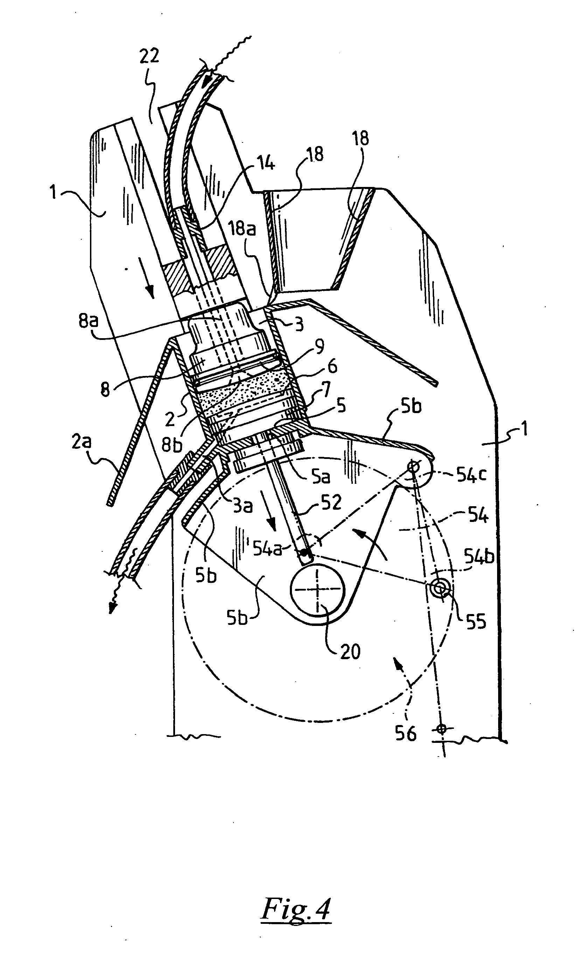

The cylinder 2 which, for the loading of a dose of ground coffee, at the beginning of a cycle of preparation of the beverage, is located in a position underneath the chute 18, as shown in Figures 1 and 2, is displaced angularly until it assumes the position aligned with that of the movement of the piston 8, as shown in Figures 3 and 4.

For the opening and closing of the infusion chamber 3 and therefore for inserting the piston 8 into, and withdrawing it from, the cylinder 2, drive means are provided which comprise an electric motor 19, keyed onto the shaft 20 of a crank 21 and the connecting rod already previously indicated as a whole by 12.

For the same purpose, conventional guide means are also provided, comprising, for example, a groove 22, provided in the wall 1 of the frame of the apparatus and in the shape of a cam, in which slidingly engages the pin 13 with which the connecting rod 12 is connected to the piston 8.

To effect the angular displacement of the cylinder 2 from the position beneath the chute 18 to the position for operating the piston 8 and vice versa, the bottom wall 5 of the cylinder 2 is connected to a support plate 5b which is keyed onto the shaft 20 and pivotal about the latter. The movement is effected by means of known conventional mechanisms.

According to the invention, the piston 8 is inserted inside the cylinder 2, positioning it at different distances from the filter 6 or, more generally, from the bottom 5, so as to form infusion chambers 3 of different volume according to the type of beverage it is desired to prepare, espresso coffee of the mediterranean type or american type coffee, and therefore depending on the quantity of powdered product measured out and loaded via the chute 18.

The positioning of the piston 8 is determined by the control unit (CPU) 23 which imparts the necessary motion to the electric motor 19 and consequent arrest. The motor 19, for reasons which will become clear from the continuation of the description, is of the type with reversible direction of rotation.

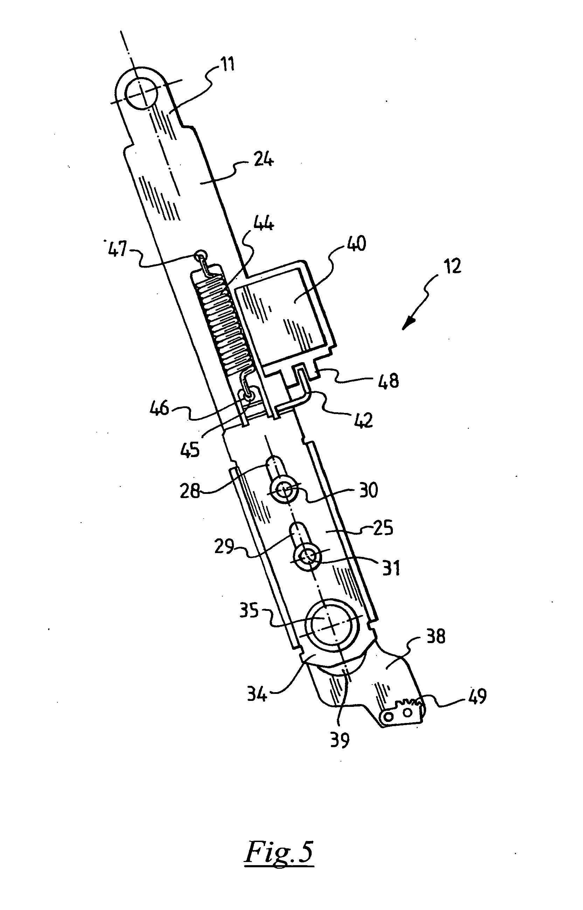

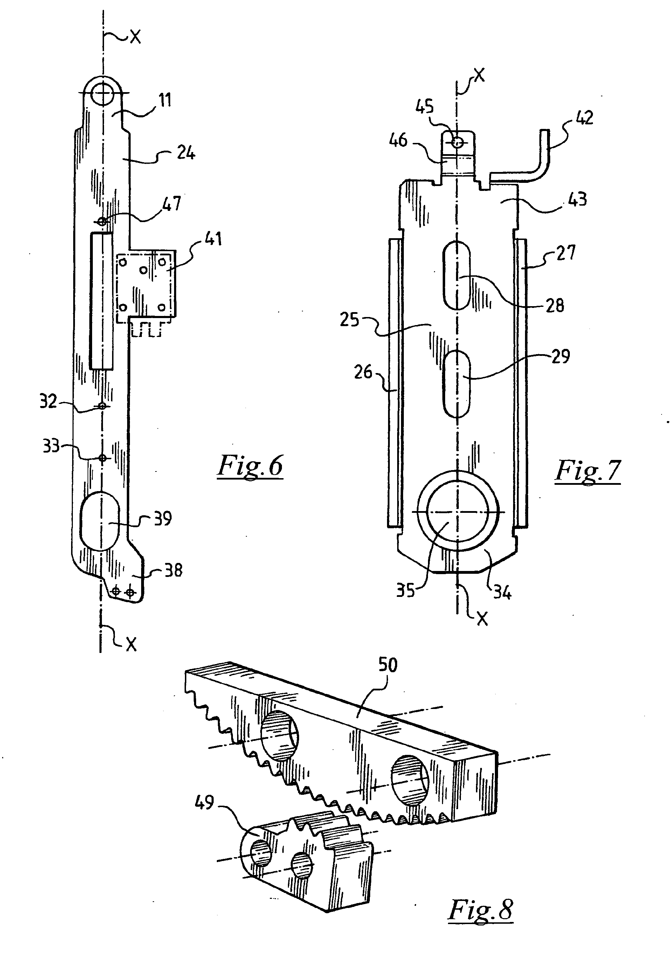

With particular reference to Figures 5, 6 and 7, it will be noted that the connecting rod, indicated as a whole by 12, comprises a first member 24, extending predominantly longitudinally along an axis X-X, and a second member 25, also extending predominantly longitudinally along the same axis X-X. The member 25 is in fact superposed on the member 24 and the latter can slide within opposed longitudinal guides 26 and 27.

The member 25 is further provided with longitudinal slots 28 and 29 in which engages, with freedom to slide, the shank of respective screws 30, 31 fixed to the underlying first member 24 in corresponding holes 32, 33.

The axial length of the slots 28 and 29 determines the amount of slide of one member relative to the other, and therefore the elongation and shortening of the connecting rod 12 as a whole.

The member 25 is further provided at its end 34 with a circular hole 35 with which that end is keyed in such a way as to be able to rotate at the end 36 of the crank 21 by means of a pin 37.

The first longitudinal member 24, at its end 38, is provided with a slot 39 by means of which it is connected so as to be able to rotate but also with the possibility of translation in the direction of the axis X-X, on the same pin 37 of the crank 21 on which the end 34 of the second longitudinal member 25 is connected.

The same member 24 is provided with a position sensor 40, mounted on a lateral tongue 41, intended to collaborate with a locating means 42, integral with the second member 25 fixed thereto at its end 43.

The latter is connected by means of a spring 44, for example a coil spring, to the first member 24. The spring 44 is hooked by one of its ends into the hole 45 of a lug 46 of the member 25 and, by the other end, into the hole 47 of the member 24 so as to exert traction between them.

In the preferred exemplary embodiment illustrated, the position sensor 40 comprises an optical device 48 into which is slidingly inserted the locating means 42 integral with the member 25. The spring 44 exerts a tension between the members 24 and 25 such that, in the rest state as illustrated in Figure 5, the locating means 42 is inserted into the optical device 48 and the screws 30, 31 are in abutment with the end of the slots 28, 29 facing towards the end 36 of the crank 21.

The end 38 of the first member 24 is provided with at least one tooth 49, in the case in question a plurality of teeth, intended to engage with an opposed toothed sector 50 borne by the frame of the apparatus by means of a device 51 for adjusting its position in relation to the end 38 of the member 24 and therefore in relation to the tooth 49.

From what has been described above with reference to the Figures cited, it becomes possible to carry out the preparation of types of beverages, particular coffee-based beverages, with different volumes.

To this end, after loading the necessary quantity of powdered product into the cylinder 2, the latter is displaced angularly until it assumes a position in axis with the direction of reciprocating movement of the piston 8.

At this point, the piston 8 is commanded to enter the cylinder 2 itself until it meets the powdered product and to continue its insertion by as much travel as is necessary only to effect the compacting of the powdered material.

The compression of the material takes place as a result of the relative movement which occurs between the first member 24 and the second member 25 of the connecting rod 12 in opposition to the force of the spring 44, with the consequent movement of the locating member 42 away from the optical sensor 48.

For a given force of the spring 44, and therefore for a given pressure to be exerted on the coffee powder, the disengagement of the member 42 out of the optical sensor 48 causes a signal to be emitted to the control unit 23 which proceeds to stop the motor 19 which had been moving in a first direction of rotation, for example, in the case illustrated, in an anticlockwise direction.

The infusion chamber 3 is closed by the piston 8 with the formation of a corresponding defined chamber volume suitable for the type of beverage to be prepared.

At this point, with the motor 19 kept inactive, the control unit 23 effects the admission of the pressurised water at the conventional temperature necessary for the beverage being prepared.

The pressurised water reaches the inside of the infusion chamber 3 via the connector 14 of the piston 8 and the inner channel 8a which traverses the latter axially.

The admission of the pressurised water initially causes lifting of the piston 8 relative to the bottom 5 of the cylinder 2 with the consequent axial displacement of the first member 24 of the connecting rod 12 which can slide with respect to the second member 25, connected to the pin 37 of the crank, gradually increasing the traction of the spring 44 until the tooth 49 engages with an upstanding zone of the toothed sector 50, as illustrated in Figure 3.

The engagement between the tooth 49 and the sector 50 effects the axial locking of the member 24 of the connecting rod 12 in the angular position which it has reached. The further action exerted by the pressurised water inside the infusion chamber 3 on the piston 8, although it gives rise to the formation of a torque with respect to the axis of rotation 20 of the motor, does not need to be opposed by a counter torque exerted by the motor 19 in order to remain at a standstill in equilibrium since the torque is discharged onto the structure 1 of the apparatus as a consequence of the coupling between the tooth 49 and the toothed sector 50.

At the end of preparation of the beverage which, in the meantime, has been dispensed via the opening 3a of the infusion chamber 3, the admission of the pressurised water ceases and the chamber 3 is emptied of the residual water.

Since the connecting rod 12 is prevented from continuing its travel by the volume of exhausted powder present in the chamber, the thrust on the piston 8 decreases. The spring 44 therefore causes the first member 24 of the connecting rod 12 to be lowered, with the consequent disengagement of the tooth 49 from the toothed sector 50 and squeezing of the exhausted grounds present in the chamber 3.

Since the movement of both the member 24 and the crank 21 is now freed, the motor 19 is actuated in the opposite direction of rotation, causing the piston 8 to be lifted within the cylinder 2 until it is completely withdrawn via the opening 4.

The reversal of the direction of rotation of the motor 19 is commanded by the control unit 23, which has received consent for this from the signal which has come from the optical sensor 48 which has again been engaged by the member 42.

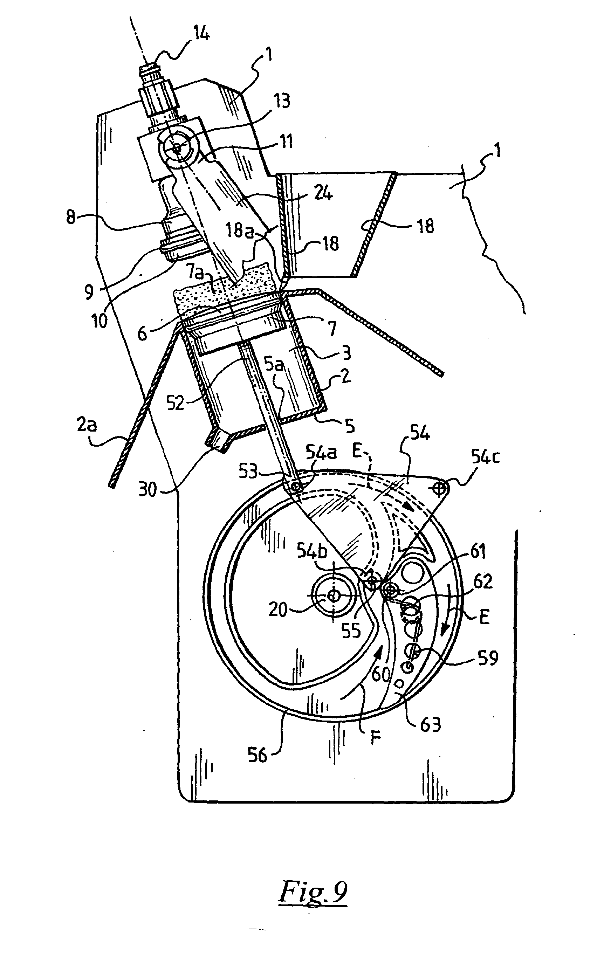

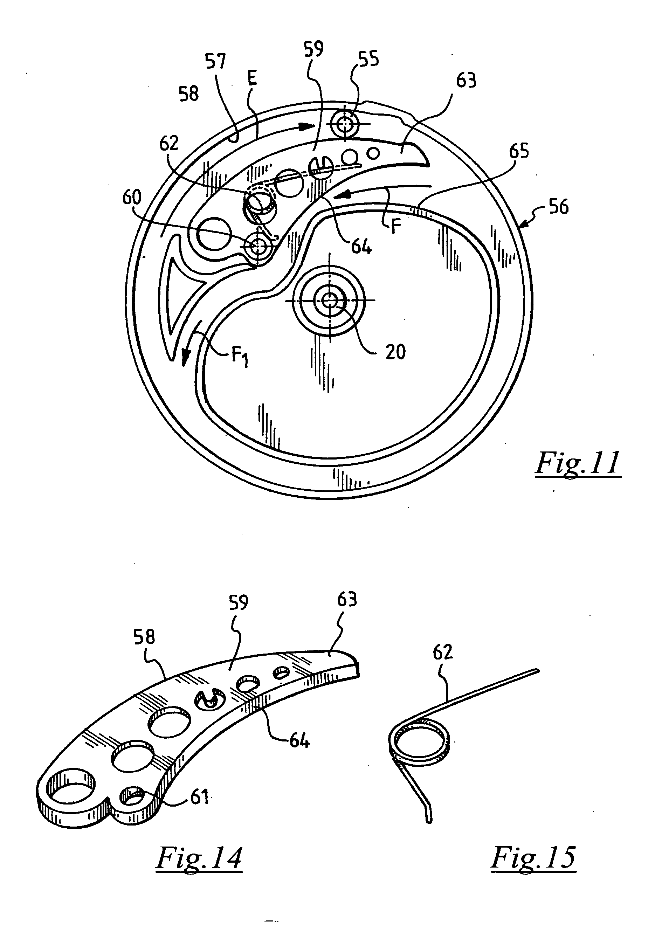

With reference to Figures 9 to 15, it will be observed that the plate 7 for expelling the layer 7a of exhausted coffee powder is connected to a stem 52 which is positioned so as to slide parallel to the axis of the cylinder 2 and which emerges from the bottom 5 via an opening 5a with the interposition of suitable conventional sealing devices.

The end 53, outside the cylinder 2, is hinged at the vertex 54a of a substantially triangular plate 54 which, at the other vertex 54b, is provided with a sliding device, preferably a roller 55.

Provided at the third vertex 54c of the triangular plate 54 is the hinged connection to the mechanisms, not illustrated since they are known and conventional, intended to impart the pivoting movement to the cylinder 2 via the support plate 5b connected to the bottom 5 of the cylinder itself.

The roller 55 engages in a cam path borne by a disc 56. The disc 56 is keyed onto the axis 20 of the motor 19 and is therefore rotatable in both directions of rotation together with the motor 19 itself.

The cam path comprises a first curved section, indicated by the arrow E, constituted by a groove formed in the outer circular wall 57 of the disc 56 and by the curved edge 58 of a beak-shaped member 59 mounted on the disc 56.

The beak-shaped member 59 is mounted to pivot about a pin 60, borne by the disc 56, and which engages in the hole 61. The member 59 is pushed by a spring 62 towards the wall 57 of the disc 56, with resilient pivoting about the pin 60, so as to obstruct, with the point 63, the path indicated by the arrow E, as indicated in Figure 9, which illustrates the position of the expulsion device assumed at the end of a phase of expulsion of the layer 7a relative to the quantity of exhausted powder after the dispensing of the beverage.

During the rotation of the disc 56 in an anticlockwise direction, the roller 55 is initially forced to travel over the section of cam indicated by the arrow E, pressing the edge 58 of the beak-shaped member 59 and, overcoming the resilient force of the spring 62, the gap opens for passing over the end 63 of the member 59.

With the reversal of the direction of rotation of the disc 56, the roller 55, after travelling over the cam section indicated by the arrow F, reaches the position illustrated in Figure 9, causing the lifting of the stem 52 and therefore of the plate 7 for expelling the layer 7a.

The lifting of the plate 7 at the end of the dispensing of the beverage causes the emergence of the layer 7a of exhausted coffee powder from the cylinder 2, as indicated in Figure 9. The layer 7a is then pushed towards the outside of the apparatus towards a conventional collection point, not illustrated, when the cylinder 2 is again displaced angularly to place its opening 4 beneath the chute 18 in order to load a fresh dose of powdered coffee.

The thrust towards the outside is brought about by the layer meeting a scraper 18a borne by the chute 18.

The layer 7a descends along a chute 2a integral with the cylinder 2.

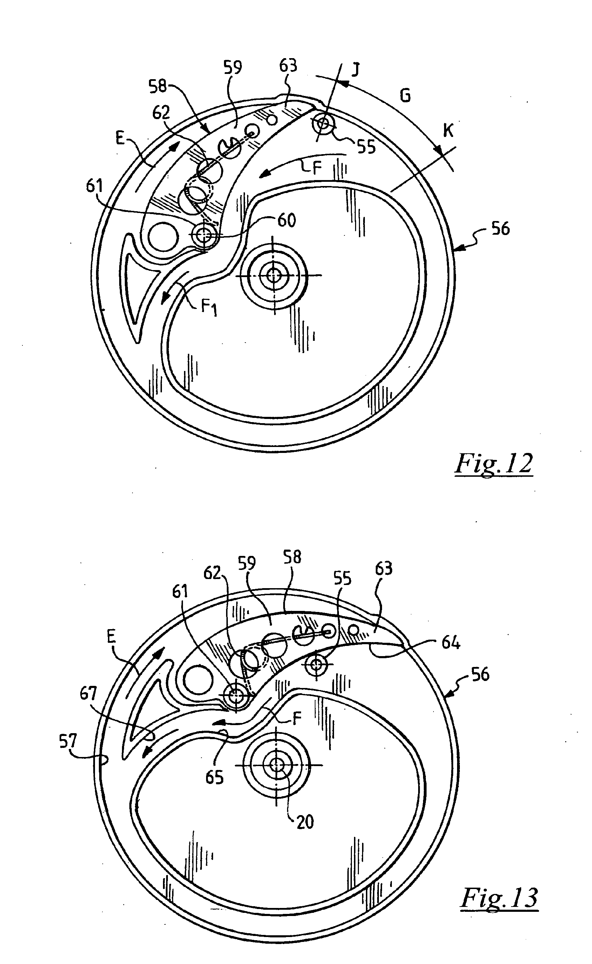

With reference to Figures 9 and 12, the arc G indicates the possible positions in which the roller 55 stops according to the quantity of powder introduced into the chamber 3, i.e. according to the volumetric type of the beverage which has been dispensed.

The position K is that in which the roller 55 stops in the case of a minimum dose of powdered material, while the position J corresponds to the maximum dose.

Once the roller 55 has passed over the end 63 of the member 59, the latter, pushed by the action of the spring 62, closes the passage towards the path of the arrow E. Therefore, when the direction of rotation of the motor 19 and of the disc 56 is reversed, the roller 55 is prevented from entering therein and is deflected along the path indicated by the arrows F and F1.

The path indicated by the arrow F is formed by the edge 64 of the member 59, opposite to the edge 58, together with the opposed shaped wall 65 of the disc 56. In this section F the reaction of the roller 55 against the edge 64 transmits to the member 54 the upward thrust movement of the stem 52 and, at the end of the path F, when the roller 55 arrives at the pin 60, the layer 7a is outside the chamber 3 of the cylinder 2.

When the expulsion of the layer 7a from the cylinder 2 is completed, the angular displacement of the cylinder 2 itself takes place in a clockwise direction, determined, in a known manner, by the support plate 5b integral with the bottom 5, while the roller 55 continues its travel in the section of the path indicated by the arrow F1 and, reacting against the wall 66, transmits to the member 54 the movement which causes the lowering of the stem 52 and the positioning of the plate 7 within the cylinder 2 itself as far as the bottom 5 of the latter, restoring the initial conditions for further beverage dispensing.

After reaching the end of the cam path indicated by the arrow F1, the roller 55 is located at the start of the cam path indicated by the arrow E, ready to carry out another cycle.

The device for expelling the exhausted powder according to the invention therefore makes it possible to carry out the expulsion in all those cases in which the closure of the cylinder and the formation of the infusion chamber is effected by drive means which reverse their direction of actuation in the opening of the infusion chamber relative to that of closure.

The dimensions and also the materials may naturally be any whatever, depending on requirements, without thereby departing from the scope of the invention as described above and claimed hereinafter.

## Claims

1. Apparatus for the preparation and dispensing of doses, in selectable variable volumes, of infusions, particularly of coffee, by means of pressurised water, comprising a cylindrical infusion chamber (3) provided with a closed end (5) and an opposed open end (4), a piston (8) with an end (10) axially insertable into said infusion chamber (3) via said open end (4) and removable therefrom, means (14) for feeding a predetermined quantity of pressurised water into said chamber (3) and opening into the chamber in the zone comprised between the end (10) of the piston inserted into the chamber (3) and the closed end (5) of the chamber, means (15, 16, 17, 18) for feeding into said infusion chamber (3) a predetermined quantity of powdered product from which to form the infusion in an amount proportional to the volume selected for the dose of infusion to be prepared, means for displacing said infusion chamber (3) between the position in which a defined quantity of powdered coffee is introduced and the position in which said piston (8) is inserted and withdrawn via said open end and vice versa, resilient means (44) for compressing said quantity of powdered product to a defined compression value, at least one opening (3a) in said chamber for dispensing the prepared infusion, means (7, 52, 54, 55) for expelling from said infusion chamber (3) the quantity of exhausted product used for the infusion at the end of preparation thereof, drive means (12, 19, 21) for actuating said piston (8) within said cylindrical infusion chamber (3) and outside it, guide means (22) for the piston (8), said drive means comprising an electric motor (19), a connecting rod-and-crank mechanism (12,21) in which the crank (21) is connected to the rotation shaft (20) of the motor (19) and the connecting rod (12) is connected between the end (36) of the crank (21) and the end of the piston (8) which remains outside said cylindrical infusion chamber (3), and also a control unit (23) for controlling the drive means and said means for feeding pressurised water into said infusion chamber (3), **characterized in that**:
- said motor (19) is reversible in its direction of rotation,
- said connecting rod (12) comprises a first member (24) extending predominantly longitudinally and a second member (25) also extending predominantly longitudinally, the two members (24, 25) being at least partly superposed on each other, said members (24, 25) being able to slide along their length for a defined distance in opposition to resilient means (44) interposed between them, the first member (24) having one end (11) connected by a hinge (13) to said piston (8) and the second member (25) having one end (34) connected by a hinge (35, 37) to said crank (21),
- it comprises locking devices (49, 50) for detachably connecting said first member (24) of the connecting rod (12) to a point (51) outside the apparatus when said members (24, 25) are in angular positions not aligned axially with said crank (21).

2. Apparatus according to claim 1, **characterized in that** said first member (24) and said second member (25) are provided with respective guiding devices (26, 27, 28, 29, 30, 31) for the longitudinal sliding of one relative to the other and for delimiting the length of the sliding movement between a position in which said two members form a minimum length and a position in which they form a maximum length between their points of connection to said end of the piston (8) and to said end (36) of the crank (21).

3. Apparatus according to claim 2, **characterized in that** said guiding devices for guiding the sliding of said members (24, 25) comprise pegs (30, 31) and slots (28, 29) having a predetermined amplitude and length, coupled to one another.

4. Apparatus according to any one of claims 1 to 3, **characterized in that** said resilient means (44) interposed between the first member (24) and the second member (25) exert a force on said members in the direction of maintaining same in the position in which the length of the connecting rod (12) is minimum.

5. Apparatus according to claim 4, wherein the force exerted by said resilient means (44) has a value corresponding to the compression which it is intended to apply to the quantity of powdered product inside said infusion chamber (3) before the pressurised water is fed in to carry out infusion.

6. Apparatus according to any one of claims 1 to 5, **characterized in that** one (24) of the two members comprises a position sensor (40) detecting the position assumed by the other member (25) when the force exerted by said resilient means (44) is applied, by means of said piston (8), to the quantity of powdered product present in said infusion chamber (3), reaching the required degree of compression, and emitting a signal corresponding to the position detected.

7. Apparatus according to claim 6, **characterized in that** said position sensor is of the optical type with an electrical signal transducer (48).

8. Apparatus according to any one of claims 1 to 7, **characterized in that** said control unit (23) is connected to said position sensor (44) and receives the signal emitted therefrom.

9. Apparatus according to claim 1, **characterized in that** said locking devices comprise a toothed sector (50) integral with the apparatus and at least one tooth (49) integral with the end (38) of said first connecting rod member (24) opposite to that (11) with which said member is connected to said piston (8), said tooth (49) being configured so as to engage and disengage between the teeth of said toothed sector (50) as a result of the longitudinal sliding of said first member (24) with respect to said second member (25) the end (34) of which is connected only to said crank (21) only in such a way as to be able to rotate.

10. Apparatus according to any one of claims 1 to 9, **characterized in that** said first member (24) of the connecting rod (12), with its opposite end (38) from that (11) with which it connects to said piston (8), is engaged with the end of the crank (21) so as to be rotatable and translatable in the direction of the longitudinal axis (X-X) of said member (24).

11. Apparatus according to claim 10, **characterized in that** said end (38) of said first member (24) of the connecting rod (12) is connected to the crank (21) via a slot (39) extending along the longitudinal axis (X-X) of the member (24).

## Patentansprüche

1. Vorrichtung zur Herstellung und Abgabe von Aufgussgetränken, insbesondere von Kaffee, in auswählbaren variablen Volumenmengen mit Hilfe von unter Druck stehendem Wasser, die aufweist: eine zylindrische Aufgusskammer (3), die mit einem geschlossenen Ende (5) und einem entgegengesetzten offenen Ende (4) versehen ist, einen Kolben (8) mit einem Ende (10), das über das offene Ende (4) axial in die Aufgusskammer (3) einführbar ist und aus dieser entfernbar ist; Einrichtungen (14) zum Zuführen einer vorgegebenen Menge von unter Druck stehendem Wasser in die Kammer (3), die sich in der Zone zwischen dem Ende (10) des in die Kammer (3) eingeführten Kolbens und dem geschlossenen Ende (5) der Kammer in die Kammer öffnen, Einrichtungen (15, 16, 17, 18) zum Zuführen einer vorgegebenen Menge eines Pulverprodukts, aus dem der Aufguss gebildet werden soll, in einer Menge, die proportional zu der ausgewählten Volumenmenge des Aufgusses, die hergestellt werden soll, ist, in die Aufgusskammer (3), Einrichtungen zum Verschieben der Aufgusskammer (3) zwischen der Position, in der eine definierte Menge an Pulverkaffee eingeführt wird, und der Position, in der der Kolben (8) über das offene Ende eingeführt und zurückgezogen wird und umgekehrt, elastische Einrichtungen (44) zum Komprimieren der Menge an Pulverprodukt auf einen definierten Kompressionswert, an wenigstens einer Öffnung (3a) in der Kammer zum Abgeben des hergestellten Aufgusses, Einrichtungen (7, 52, 54, 55) zum Ausstoßen der Menge an erschöpftem Produkt, das für den Aufguss verwendet wurde, aus der Aufgusskammer (3) am Ende seiner Zubereitung, Antriebseinrichtungen (12, 19, 21) zum Betätigen des Kolbens (8) innerhalb der zylindrischen Aufgusskammer (3) und außerhalb von ihr, Führungseinrichtungen (22) für den Kolben (8), wobei die Antriebseinrichtungen einen Elektromotor (19), einen Verbindungsstangen-Kurbelmechanismus (12, 21), in dem die Kurbel (21) mit der Drehwelle (20) des Motors (19) verbunden ist und die Verbindungsstange (12) zwischen dem Ende (36) der Kurbel (21) und dem Ende des Kolbens (8), das außerhalb der zylindrischen Aufgusskammer (3) bleibt, verbindet, aufweisen, und auch eine Steuereinheit (23) zum Steuern der Antriebseinrichtungen und der Einrichtungen zum Zuführen von unter Druck stehendem Wasser in die Aufgusskammer (3), **dadurch gekennzeichnet, dass**:
- die Drehrichtung des Motors (19) umkehrbar ist,
- die Verbindungsstange (12) ein erstes Element (24), das sich vorwiegend längs erstreckt, und ein zweites Element (25), das sich ebenfalls vorwiegend längs erstreckt, aufweist, wobei die zwei Elemente (24, 25) einander wenigstens teilweise überlagert sind, wobei die Elemente (24, 25) fähig sind, entlang ihrer Länge über eine definierte Entfernung entgegengesetzt zu der zwischen ihnen eingefügten elastischen Einrichtung (44) zu gleiten, wobei das erste Element (24) ein Ende (11) durch ein Gelenk (13) an dem Kolben (8) verbunden hat, und das zweite Element (25) ein Ende (34) durch ein Gelenk (35, 37) mit der Kurbel (21) verbunden hat,
- sie Arretiervorrichtungen (49, 50) zum abnehmbaren Verbinden des ersten Elements (24) der Verbindungsstange (12) mit einem Punkt (51) außerhalb der Vorrichtung aufweist, wenn die Elemente (24, 25) in Winkelpositionen sind, die mit der Kurbel (21) axial nicht ausgerichtet sind.

2. Vorrichtung nach Anspruch 1, **dadurch gekennzeichnet, dass** das erste Element (24) und das zweite Element (25) mit jeweiligen Führungsvorrichtungen (26, 27, 28, 29, 30, 31) für das Längsgleiten des einen relativ zum anderen und zum Begrenzen der Länge der Gleitbewegung zwischen einer Position, in der die beiden Elemente eine minimale Länge bilden, und einer Position, in der sie eine maximale Länge zwischen ihren Verbindungspunkten mit dem Ende des Kolbens (8) und dem Ende (36) der Kurbel (21) bilden, versehen sind.

3. Vorrichtung nach Anspruch 2, **dadurch gekennzeichnet, dass** die Führungsvorrichtungen zum Führen des Gleitens der Elemente (24, 25) Stifte (30, 31) und Schlitze (28, 29) aufweisen, die eine vorgegebene Größe und Länge haben, die miteinander gekoppelt sind.

4. Vorrichtung nach einem der Ansprüche 1 bis 3, **dadurch gekennzeichnet, dass** die elastischen Einrichtungen, die zwischen das erste Element (24) und das zweite Element (25) eingefügt sind, eine Kraft auf die Elemente in der Richtung ausüben, in der sie in der Position gehalten werden, in der die Länge der Verbindungsstange (12) minimal ist.

5. Vorrichtung nach Anspruch 4, wobei die Kraft, die von der elastischen Einrichtung (44) ausgeübt wird, einen Wert hat, der der beabsichtigten Kompression entspricht, welche auf die Menge des Pulverprodukts im Inneren der Aufgusskammer (3) angewendet werden soll, bevor unter Druck stehendes Wasser eingespeist wird, um den Aufguss auszuführen.

6. Vorrichtung nach einem der Ansprüche 1 bis 5, **dadurch gekennzeichnet, dass** eines (24) der zwei Elemente einen Positionssensor (40) aufweist, der die von dem anderen Element (25) eingenommene Position erfasst, wenn die von der elastischen Einrichtung (44) ausgeübte Kraft, die mit Hilfe des Kolbens (8) auf die Menge des in der Aufgusskammer (3) vorhandenen Pulverprodukts angewendet wird, den erforderlichen Kompressionsgrad erreicht, und der ein Signal aussendet, das der erfassten Position entspricht.

7. Vorrichtung nach Anspruch 6, **dadurch gekennzeichnet, dass** der Positionssensor vom optischen Typ mit einem elektrischen Signalwandler (48) ist.

8. Vorrichtung nach einem der Ansprüche 1 bis 7, **dadurch gekennzeichnet, dass** die Steuereinheit (23) mit dem Positionssensor (44) verbunden ist und das von ihm ausgesendete Signal empfängt.

9. Vorrichtung nach Anspruch 1, **dadurch gekennzeichnet, dass** die Arretiervorrichtungen einen gezahnten Abschnitt (50) integral mit der Vorrichtung und wenigstens einen Zahn (49) integral mit dem Ende (38) des ersten Verbindungsstangenelements (24) entgegengesetzt zu dem (11), mit dem das Element mit dem Kolben (8) verbunden ist, aufweisen, wobei der Zahn (49) derart aufgebaut ist, dass er als ein Ergebnis des Längsgleitens des ersten Elements (24) in Bezug auf das zweite Element (25), dessen Ende (34) nur in einer derartigen Weise lediglich mit der Kurbel (21) verbunden ist, um zu einer Drehung fähig zu sein, zwischen den Zähnen des gezahnten Abschnitts (50) eingreift und sich davon löst.

10. Vorrichtung nach einem der Ansprüche 1 bis 9, **dadurch gekennzeichnet, dass** das erste Element (24) der Verbindungsstange (12) mit seinem entgegengesetzten Ende (38) zu dem, mit dem es mit dem Kolben (8) verbindet, mit dem Ende der Kurbel (21) in Eingriff ist, um in die Richtung der Längsachse (X-X) des Elements (24) drehbar und verschiebbar zu sein.

11. Vorrichtung nach Anspruch 10, **dadurch gekennzeichnet, dass** das Ende (38) des ersten Elements (24) der Verbindungsstange (12) über einen Schlitz (39), der sich entlang der Längsachse (X-X) des Elements (24) erstreckt, mit der Kurbel (21) verbunden ist.

## Revendications

1. Appareil pour la préparation et la distribution de doses, en volumes sélectivement variables, d'infusions, en particulier de café, au moyen d'eau sous pression, comprenant une chambre d'infusion cylindrique (3) prévue avec une extrémité fermée (5) et une extrémité ouverte (4) opposée, un piston (8) avec une extrémité (10), pouvant être inséré axialement dans ladite chambre d'infusion (3) par l'intermédiaire ladite extrémité ouverte (4) et amovible de cette dernière, des moyens (14) pour amener une quantité prédéterminée d'eau sous pression dans ladite chambre (3) et s'ouvrant dans la chambre, dans la zone comprise entre l'extrémité (10) du piston inséré dans la chambre (3) et l'extrémité fermée (5) de la chambre, des moyens (15, 16, 17, 18) pour amener, dans ladite chambre d'infusion (3), une quantité prédéterminée de produit en poudre à partir duquel on forme l'infusion selon une quantité proportionnelle au volume sélectionné pour la dose d'infusion à préparer, des moyens pour déplacer ladite chambre d'infusion (3) entre la position dans laquelle une quantité définie de café en poudre est introduite et la position dans laquelle ledit piston (8) est inséré et retiré par l'intermédiaire ladite extrémité ouverte et vice versa, des moyens élastiques (44) pour compresser ladite quantité de produit en poudre jusqu'à une valeur de compression définie, au moins une ouverture (3a) dans ladite chambre pour distribuer l'infusion préparée, des moyens (7, 52, 54, 55) pour expulser de ladite chambre d'infusion (3), la quantité de produit évacué utilisée pour l'infusion à la fin de sa préparation, des moyens d'entraînement (12, 19, 21) pour actionner ledit piston (8) à l'intérieur de ladite chambre d'infusion cylindrique (3) et à l'extérieur de cette dernière, des moyens de guidage (22) pour le piston (8), lesdits moyens d'entraînement comprenant un moteur électrique (19), un mécanisme de tige de raccordement et de manivelle (12, 21) dans lequel la manivelle (21) est raccordée à l'arbre de rotation (20) du moteur (19) et la tige de raccordement (12) est raccordée entre l'extrémité (36) de la manivelle (21) et l'extrémité du piston (8) qui reste à l'extérieur de ladite chambre d'infusion cylindrique (3), et également une unité de commande (23) pour commander les moyens d'entraînement et lesdits moyens pour amener l'eau sous pression dans ladite chambre d'infusion (3), **caractérisé en ce que** :
- ledit moteur (19) est réversible du point de vue de sa direction de rotation,
- ladite tige de raccordement (12) comprend un premier élément (24) s'étendant principalement longitudinalement et un deuxième élément (25) s'étendant également principalement longitudinalement, les deux éléments (24, 25) étant au moins partiellement superposés l'un sur l'autre, lesdits éléments (24, 25) pouvant coulisser le long de leur longueur sur une distance définie en opposition aux moyens élastiques (44) intercalés entre eux, le premier élément (24) ayant une extrémité (11) raccordée par une charnière (13) audit piston (8) et le deuxième élément (25) ayant une extrémité (34) raccordée par une charnière (35, 37) à ladite manivelle (21),
il comprend des moyens de blocage (49, 50) pour raccorder de manière détachable ledit premier élément (24) de la tige de raccordement (12) à un point (51) situé à l'extérieur de l'appareil lorsque lesdits éléments (24, 25) sont dans des positions angulaires non alignées axialement avec ladite manivelle (21).

2. Appareil selon la revendication 1, **caractérisé en ce que** ledit premier élément (24) et ledit deuxième élément (25) sont prévus avec des dispositifs de guidage (26, 27, 28, 29, 30, 31) respectifs pour le coulissement longitudinal l'un par rapport à l'autre et pour délimiter la longueur du mouvement coulissant entre une position dans laquelle lesdits deux éléments forment une longueur minimale et une position dans laquelle ils forment une longueur maximale entre leurs points de raccordement à ladite extrémité du piston (8) et à ladite extrémité (36) de la manivelle (21).

3. Appareil selon la revendication 2, **caractérisé en ce que** lesdits dispositifs de guidage pour guider le coulissement desdits éléments (24, 25) comprennent des taquets de fixation (30, 31) et des fentes (28, 29) ayant une amplitude et une longueur prédéterminées, couplés les uns aux autres.

4. Appareil selon l'une quelconque des revendications 1 à 3, **caractérisé en ce que** lesdits moyens élastiques (44) intercalés entre le premier élément (24) et le deuxième élément (25) exercent une force sur lesdits éléments dans la direction de maintien de ces derniers, dans la position dans laquelle la longueur de la tige de raccordement (12) est minimale.

5. Appareil selon la revendication 4, dans lequel la force exercée par lesdits moyens élastiques (44) a une valeur correspondant à la compression qu'il est prévu d'appliquer sur la quantité de produit en poudre à l'intérieur de ladite chambre d'infusion (3) avant que l'eau sous pression ne soit amenée pour réaliser l'infusion.

6. Appareil selon l'une quelconque des revendications 1 à 5, **caractérisé en ce que** l'un (24) des deux éléments comprend un capteur de position (40) détectant la position prise par l'autre élément (25) lorsque la force exercée par lesdits moyens élastiques (44) est appliquée, au moyen dudit piston (8), sur la quantité de produit en poudre présent dans ladite chambre d'infusion (3), atteignant le degré de compression requis, et émettant un signal correspondant à la position détectée.

7. Appareil selon la revendication 6, **caractérisé en ce que** ledit capteur de position est du type optique avec un capteur de signal électrique (48).

8. Appareil selon l'une quelconque des revendications 1 à 7, **caractérisé en ce que** ladite unité de commande (23) est raccordée audit capteur de position (44) et reçoit le signal émis par ce dernier.

9. Appareil selon la revendication 1, **caractérisé en ce que** lesdits dispositifs de blocage comprennent un secteur denté (50) solidaire de l'appareil et au moins une dent (49) solidaire de l'extrémité (38) dudit premier élément de tige de raccordement (24) opposée à celle (11) avec laquelle ledit élément est raccordé audit piston (8), ladite dent (49) étant configurée afin de se mettre en prise et se dégager entre les dents dudit secteur denté (50) en raison du coulissement longitudinal dudit premier élément (24) par rapport audit deuxième élément (25), dont l'extrémité (34) est uniquement raccordée à ladite manivelle (21) uniquement afin de pouvoir tourner.

10. Appareil selon l'une quelconque des revendications 1 à 9, **caractérisé en ce que** ledit premier élément (24) de la tige de raccordement (12), avec son extrémité opposée (38) à celle (11) avec laquelle il est raccordé audit piston (8), est mis en prise avec l'extrémité de la manivelle (21) afin de pouvoir tourner et effectuer un mouvement de translation dans la direction de l'axe longitudinal (X-X) dudit élément (24).

11. Appareil selon la revendication 10, **caractérisé en ce que** ladite extrémité (38) dudit premier élément (24) de la tige de raccordement (12) est raccordée à la manivelle (21) par l'intermédiaire d'une fente (39) s'étendant le long de l'axe longitudinal (X-X) de l'élément (24).
